# EUROPEAN PATENT APPLICATION

(11) **EP 2 977 151 A2**
(43) Date of publication of application: **27.01.2016**
(21) Application number: 15174735.9
(22) Date of filing: 01.07.2015
(51) Int. Cl.: B25J 19/00, B23K 9/133

(54) **ROBOT**

(30) Priority: 24.07.2014 JP 2014150630
(71) Applicant: Kabushiki Kaisha Yaskawa Denki, Kitakyushu-shi, Fukuoka 806-0004 (JP)
(72) Inventor: SAITO, Hiroshi, Kitakyushu-shi, Fukuoka 806-0004 (JP); IZAWA, Tamon, Kitakyushu-shi, Fukuoka 806-0004 (JP); ICHIBANGASE, Atsushi, Kitakyushu-shi, Fukuoka 806-0004 (JP)
(74) Representative: Viering, Jentschura & Partner mbB Patent- und Rechtsanwälte

(57) **Abstract**

A robot includes a turnable base, a lower arm, an upper arm, first and second spaces, and first and second routing members. The turnable base is coupled to a base fixed to an installation surface, and is turnable about a first axis. The lower arm includes a first base end coupled to the turnable base and rotatable about a second axis approximately orthogonal to the first axis. The upper arm includes a second base end coupled to the lower arm and rotatable about a third axis approximately parallel to the second axis. The first and second spaces are disposed in the lower arm, and face each other and extend in a length direction of the lower arm. The first and second routing members are respectively routed in the first and second spaces, and each include at least two bent portions bent in the first and second spaces.

## Description

### BACKGROUND

### FIELD OF THE INVENTION

The present invention relates to a robot.

### DISCUSSION OF THE BACKGROUND

Japanese Unexamined Patent Application Publication No. 2011-152591 discloses a robot for arc welding and similar purposes. The robot includes, for example, a turnable base and a multi-axis arm. The turnable base is turnable on a base portion fixed to a floor or a similar surface. The multi-axis arm is mounted on the turnable base.

The robot has various cables for power supply, control, and other purposes. These cables are bundled together and routed, for example, along the exterior of the multi-axis arm.

The contents of Japanese Unexamined Patent Application Publication No. 2011-152591 are incorporated herein by reference in their entirety.

Japanese Unexamined Patent Application Publication No. 2011-152591 has room for improvement in appearance and in prevention of the robot from obstructing peripheral objects.

Specifically, routing the various cables along the exterior of the multi-axis arm might disfigure the robot and make the robot more liable to obstruct peripheral objects while making multi-axis movements.

One embodiment of the present disclosure has been made in view of the above-described circumstances, and it is an object of the present disclosure to provide a robot that ensures a neater appearance of the robot and that eliminates or minimizes the robot's obstruction of peripheral objects.

### SUMMARY

According to one aspect of the present disclosure, a robot includes a turnable base, a lower arm, an upper arm, a first space, a second space, a first routing member, and a second routing member. The turnable base is coupled to a base fixed to an installation surface, and is turnable about a first axis. The lower arm includes a first base end coupled to the turnable base and rotatable about a second axis approximately orthogonal to the first axis. The upper arm includes a second base end coupled to the lower arm and rotatable about a third axis approximately parallel to the second axis. The first space and the second space are disposed in the lower arm. The first space and the second space face each other and extend in a length direction of the lower arm. The first routing member and the second routing member are respectively routed in the first space and the second space, and each include at least two bent portions bent in the first space and the second space.

One embodiment of the present disclosure eases the appearance of the robot, and eliminates or minimizes obstruction of peripheral objects.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic side view of a robot according to an embodiment;
FIG. 2 is a schematic view of axes of the robot, illustrating how each axis moves;
FIG. 3A is a schematic view of a cable configuration;
FIG. 3B is a schematic view of a configuration in which the cable is routed;
FIG. 3C is a schematic view of a first modified cable configuration;
FIG. 3D is a schematic view of a second modified cable configuration;
FIG. 4A is a first internal structural view of a lower arm, illustrating a specific configuration in which the cable is routed;
FIG. 4B is a second internal structural view of the lower arm, illustrating another specific configuration in which the cable is routed;
FIG. 5 is a schematic front view of the robot according to a modification, illustrating a possible configuration in which the cable is routed;
FIG. 6A is a perspective phantom view of the base and its surroundings, illustrating a possible configuration in which the cable is routed around an axis S;
FIG. 6B is a schematic plan view of a first specific configuration in which the cable is routed around the axis S;
FIG. 6C is a schematic plan view of a second specific configuration in which the cable is routed around the axis S; and
FIG. 7 is a schematic perspective phantom view of an upper arm and its surroundings.

### DESCRIPTION OF THE EMBODIMENTS

A robot according to an embodiment will be described in detail below by referring to the accompanying drawings. It is noted that the following embodiment is not intended to limit the present disclosure.

The following description will take an arc welding robot as an example. A welding torch will be referred to as a "torch".

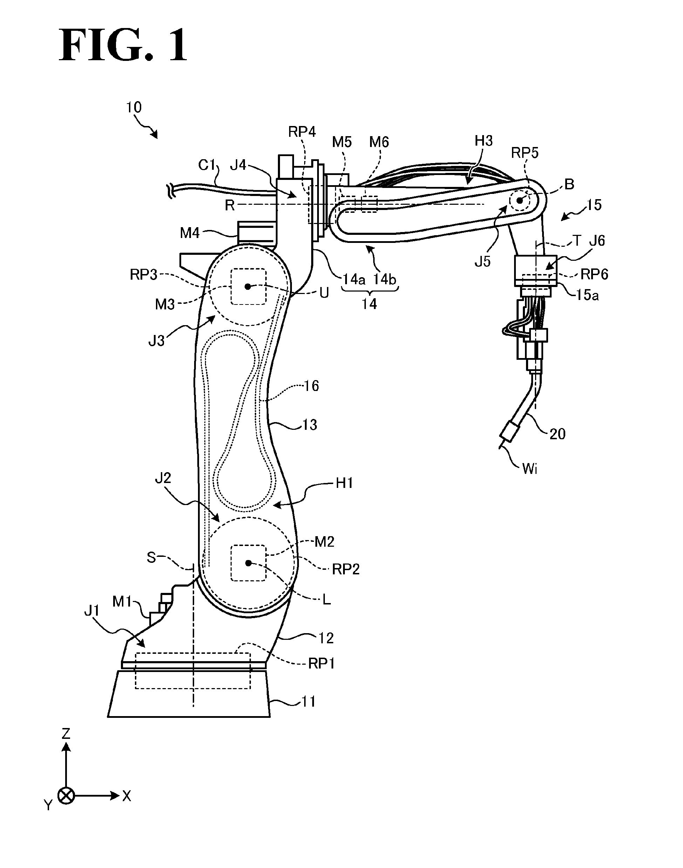

First, a schematic configuration of a robot 10 according to the embodiment will be described. FIG. 1 is a schematic side view of the robot 10 according to the embodiment. For convenience of description, the positions of the components of the robot 10 relative to each other will be described under the assumption that the turning position and posture of the robot 10 are basically as illustrated in FIG. 1. The state illustrated in FIG. 1 may occasionally be referred to as "basic posture" of the robot 10.

Also in FIG. 1, the side of the installation surface on which a base 11 of the robot 10 is installed will be referred to as "base end side". A portion of each of the components of the robot 10 on and around the base end side of each component will be referred to as "base end". The side of the robot 10 on which a flange 15a is disposed will be referred to as "distal end side". A portion of each of the components of the robot 10 on and around the distal end side of each component will be referred to as "distal end".

FIG. 1 shows a three-dimensional Cartesian coordinate system including a Z axis with its vertically upward direction assumed positive direction for ease of description. The Cartesian coordinate system may appear in another figure in the following description. In this embodiment, the front of the robot 10 faces the positive direction of an X axis.

As illustrated in FIG. 1, the robot 10 is what is called a serial link vertical multi-articular robot, and includes six rotary joint axes, namely, an axis S, an axis L, an axis U, an axis R, an axis B, and an axis T. The axis S is an example of the first axis, and the axis L is an example of the second axis. The axis U is an example of the third axis, and the axis R is an example of the fourth axis.

The robot 10 includes six joint mechanisms J1 to J6, which respectively correspond to the axis S, the axis L, the axis U, the axis R, the axis B, and the axis T. The joint mechanisms J1 to J6 respectively include turnable portions RP1 to RP6. The turnable portions RP1 to RP6 each turn about the corresponding axis to draw an imaginary, approximately cylindrical rotating body.

The robot 10 includes six servomotors M1, M2, M3, M4, M5, and M6. The servomotors M1 to M6 respectively turn the turnable portions RP1 to RP6 respectively of the joint mechanisms J1 to J6.

The robot 10 includes the base 11, a turnable base 12, a lower arm 13, an upper arm 14, a mounting portion 15, and a cable 16. The upper arm 14 includes a first arm 14a and a second arm 14b. The second arm 14b is an example of the wrist, and the cable 16 is an example of the routing member, the first routing member, and the second routing member.

The base 11 is an example of the fixed base fixed to a floor or a similar surface, and supports the turnable base 12 in a turnable manner about the axis S. The servomotor M1 is driven to turn the turnable portion RP1 so as to cause the base 11 and the turnable base 12 to turn relative to each other about the axis S.

The turnable base 12 supports the base end of the lower arm 13 in a turnable manner about the axis L, which is orthogonal to the axis S. The servomotor M2 is driven to turn the turnable portion RP2 so as to cause the turnable base 12 and the lower arm 13 to turn relative to each other about the axis L.

The lower arm 13, at its distal end, supports the base end of the first arm 14a of the upper arm 14 in a turnable manner about the axis U, which is parallel to the axis L. The servomotor M3 is driven to turn the turnable portion RP3 so as to cause the lower arm 13 and the first arm 14a to turn relative to each other about the axis U.

The lower arm 13 contains a space H1, which extends in a length direction of the lower arm 13. The cable 16 has at least two bent portions in the space H1. As used herein, the terms "bend", "bent", and "bending" refer to an act of bending the cable 16 into an arc shape or a state in which the cable 16 is bent in an arc shape. By the arc shape, this embodiment means that each bent portion has a bending radius.

For example, in this embodiment as illustrated in FIG. 1, the cable 16 is routed within the lower arm 13 in such a manner that the cable 16 is bent at two bent portions into an approximately S-shape in a view in a Y-axis direction.

Thus, in this embodiment, the cable 16 is routed within the lower arm 13. This makes the robot 10 more favorable in appearance and less likely to obstruct peripheral objects. In other words, this embodiment ensures a neater appearance of the robot 10, and eliminates or minimizes the robot 10's obstruction of the peripheral objects.

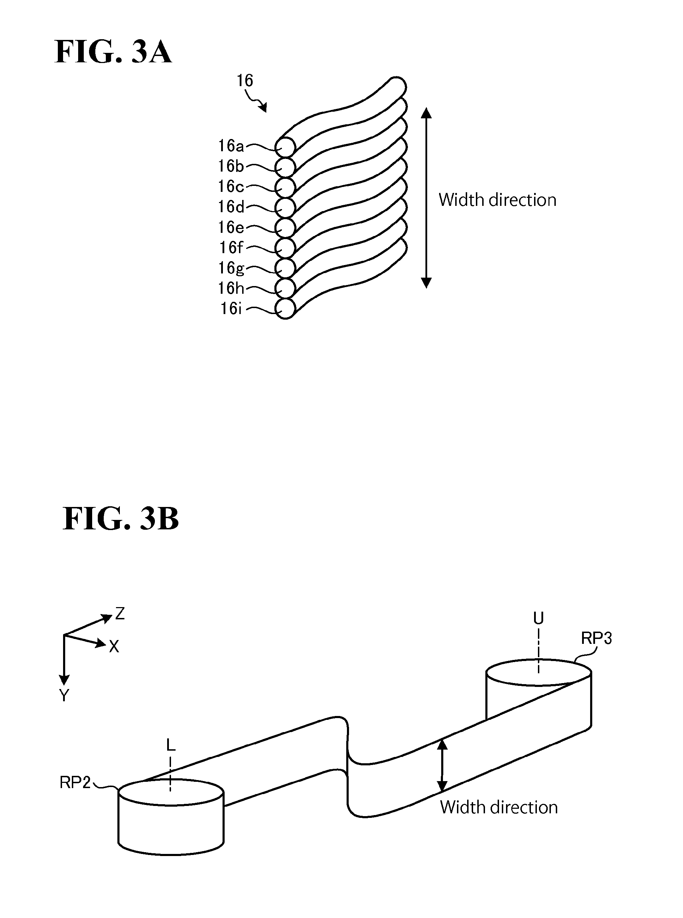

Examples of the cable 16 include, but are not limited to, cables and hoses for welding equipment, and cables for the servomotors M1 to M6. In this embodiment, the cable 16 is what is called a flat cable, which has a shape of a band. The band is made up of linear cables and hoses, such as the foregoing cables and hoses, arranged side by side. The cable 16 will be described in detail later by referring to FIG. 3A and later drawings.

In the following description, the cables and hoses for welding equipment may occasionally be referred to as "equipment cables", and the cables for the servomotors M1 to M6 may occasionally be referred to as "in-device cables".

The first arm 14a, at its distal end, supports the base end of the second arm 14b in a turnable manner about the axis R, which is orthogonal to the axis U. The servomotor M4 is driven to turn the turnable portion RP4 so as to cause the first arm 14a and the second arm 14b to turn relative to each other about the axis R.

The second arm 14b, at its distal end, supports the base end of the mounting portion 15 in a turnable manner about the axis B, which is orthogonal to the axis R. The servomotor M5 is driven to turn the turnable portion RP5 through a driving force transmission mechanism (such as a belt and a pulley) provided in the second arm 14b. This causes the second arm 14b and the mounting portion 15 to turn relative to each other about the axis B.

A torch 20 is attached to the mounting portion 15. The mounting portion 15 includes the flange 15a, which is rotatable about the axis T, which is orthogonal to the axis B. The torch 20 is attached to the mounting portion 15 through the flange 15a.

The servomotor M6 is driven to turn the turnable portion RP6 through the driving force transmission mechanism provided in the second arm 14b. This causes the flange 15a to turn about the axis T.

The terms "orthogonal" and "parallel", as used herein, may not necessarily be mathematically accurate but may include practical tolerance and error. The term "orthogonal", as used in this embodiment, means not only a state in which two lines (turning axes) are orthogonal to each other on the same plane, but also a state in which two lines (turning axes) are skew to each other.

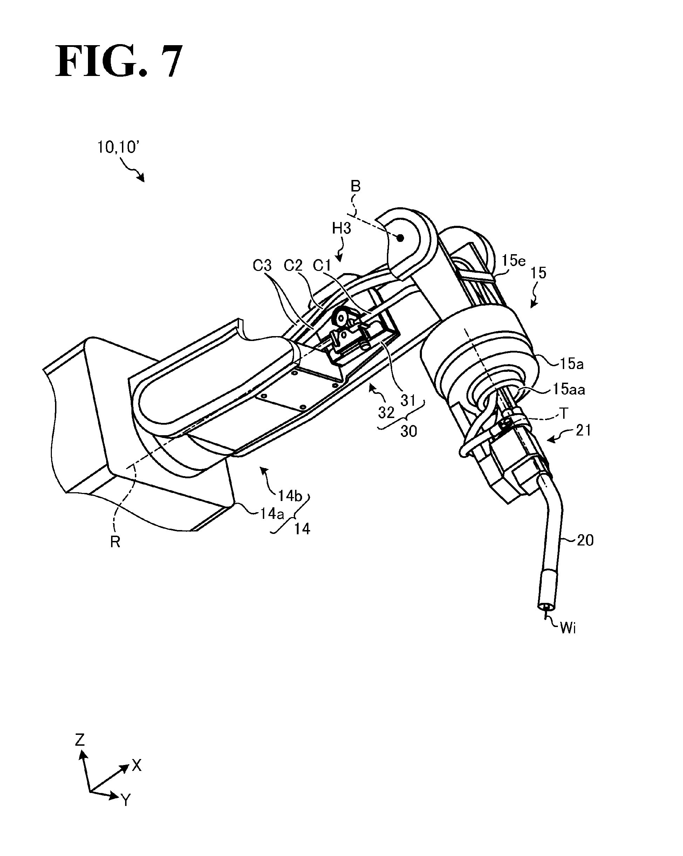

The robot 10 includes a feeding device, not illustrated in FIG. 1, that feeds a wire Wi. In a plan view of the robot 10 in its basic posture, the feeding device intersects the axis line of the axis R in a space H3, which is defined between the base end and the distal end of the second arm 14b, which has a bifurcated shape opening on the distal end. The feeding device will be described later by referring to FIG. 7.

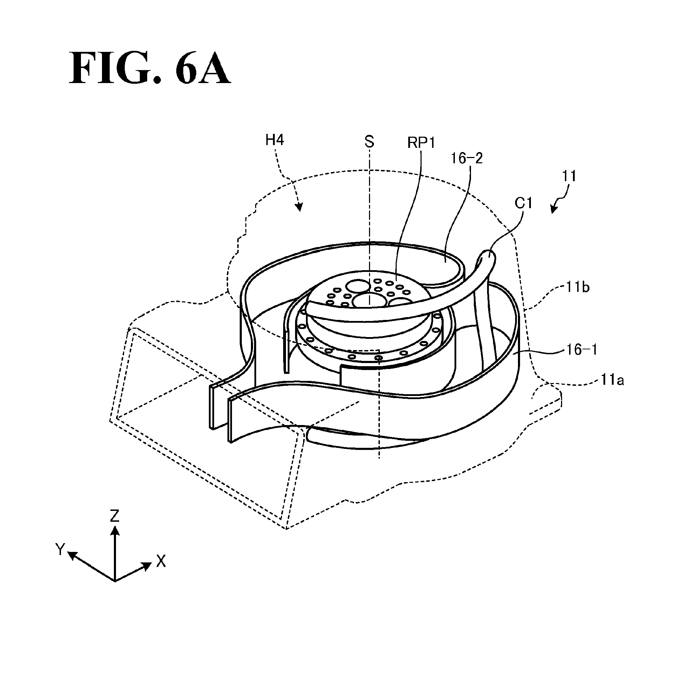

A wire cable C1 is inserted into the space H3 through the base end of the upper arm 14 and routed along the axis line of the axis R. The wire cable C1 is an example of the wire feeding cable. Routing of the wire cable C1 will be described later by referring to FIGs. 6A to 7.

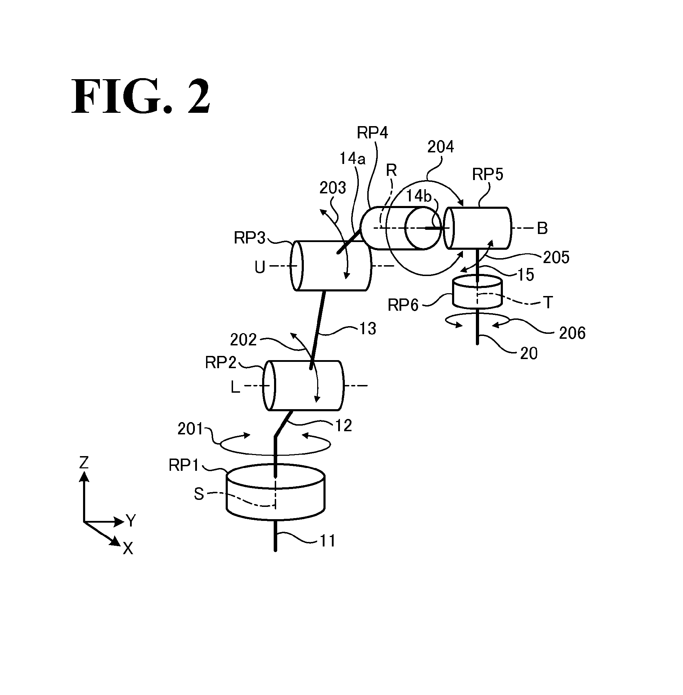

For better understanding of the description that has been made so far, the movement of each axis of the robot 10 will be schematically described by referring to FIG. 2. FIG. 2 is a schematic view of the axes of the robot 10, illustrating how each axis moves. In FIG. 2, the robot 10 is simplified with each of the turnable portions RP1 to RP6, which turn to draw approximately cylindrical rotating bodies, being illustrated in the form of a column.

As illustrated in FIG. 2, the turnable base 12, while being supported by the base 11, turns about the axis S by the turning of the turnable portion RP1 (see the arrow 201 in FIG. 2). The lower arm 13, while being supported by the turnable base 12, swings back and forth about the axis L by the turning of the turnable portion RP2 (see the arrow 202 in FIG. 2).

The first arm 14a, while being supported by the lower arm 13, swings up and down about the axis U by the turning of the turnable portion RP3 (see the arrow 203 in FIG. 2). The second arm 14b, while being supported by the first arm 14a, turns about the axis R by the turning of the turnable portion RP4 (see the arrow 204 in FIG. 2).

The mounting portion 15, while being supported by the second arm 14b, swings about the axis B by the turning of the turnable portion RP5 (see the arrow 205 in FIG. 2). The distal end (that is, the flange 15a) of the mounting portion 15 turns about the axis T by the turning of the turnable portion RP6 (see the arrow 206 in FIG. 2).

Next, a specific configuration of the cable 16 will be described by referring to FIGs. 3A to 3D. FIG. 3A is a schematic view of a configuration of the cable 16. FIG. 3B is a schematic view of a configuration in which the cable 16 is routed.

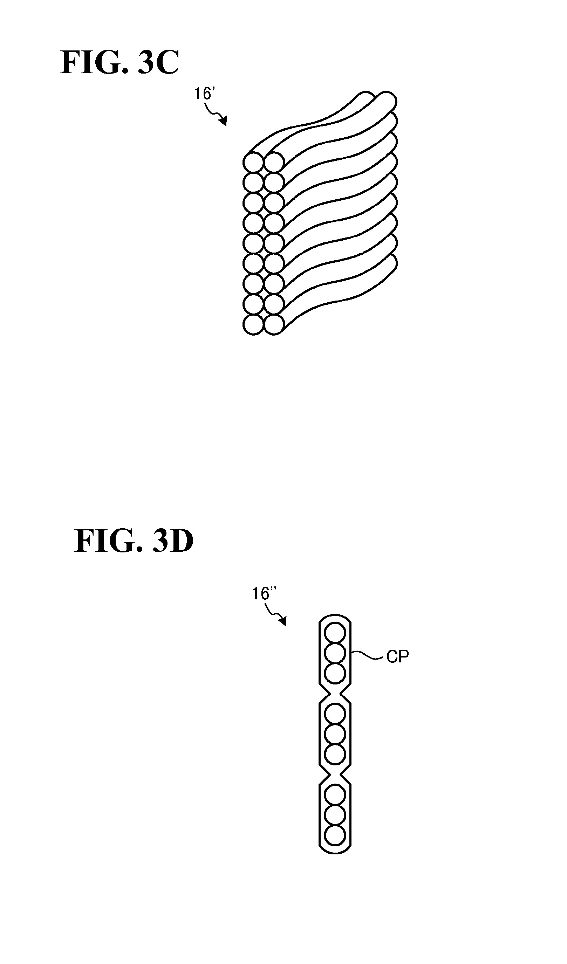

FIGs. 3C and 3D are schematic views of first and second modified configurations of the cable 16. FIG. 3A is a perspective cross-sectional view of the cable 16, and FIG. 3C is a perspective cross-sectional view of a cable 16'. FIG. 3D is a schematic cross-sectional view of a cable 16".

As described above and as illustrated in FIG. 3A, the cable 16 is a band made up of a plurality of various flexible, linear cables (for example, cables 16a to 16i) gathered together side by side to serve as equipment cables or in-device cables.

That is, the cable 16 is a flat cable. Making the cable 16 approximately flat ensures that heat released from the cables 16a to 16i are less likely to be contained within the cable 16. In other words, heat dissipation performance improves.

Making the cable 16 approximately flat also facilitates handling of the cable 16, that is, improves work efficiency in the assembly process or other processes involving the robot 10.

As illustrated in FIG. 3A, each of the directions in which the cables 16a to 16i are arranged will be referred to as "width direction" of the cable 16, for convenience of description.

As illustrated in FIG. 3B, the cable 16 is routed in such an orientation that the "width direction" is approximately parallel to, for example, the axes L and U respectively of the turnable portions RP2 and RP3.

While in FIG. 3A the cable 16 is a single stage band, a multi-stage band is also possible, such as the cable 16' illustrated in FIG. 3C. Still another possible example is the cable 16" illustrated in FIG. 3D, where a plurality of sets of welded linear cables are arranged side by side and covered with an outer cover CP into a band.

For avoidance of length variations and other purposes, the linear cables of the cable 16 (or the cable 16' or 16") are preferably welded to each other. It is also possible, however, to leave a part of each cable unwelded, depending on the circumstances. In other words, it is sufficient that the cables of the cable 16 are in contact with each other at least at a part of each of the cables.

In this regard, a possible example is that the cables 16a to 16i are separate from each other somewhere along the cable 16 and twistable together, as conventionally practiced. This makes the cable 16 adaptable to various routing layouts.

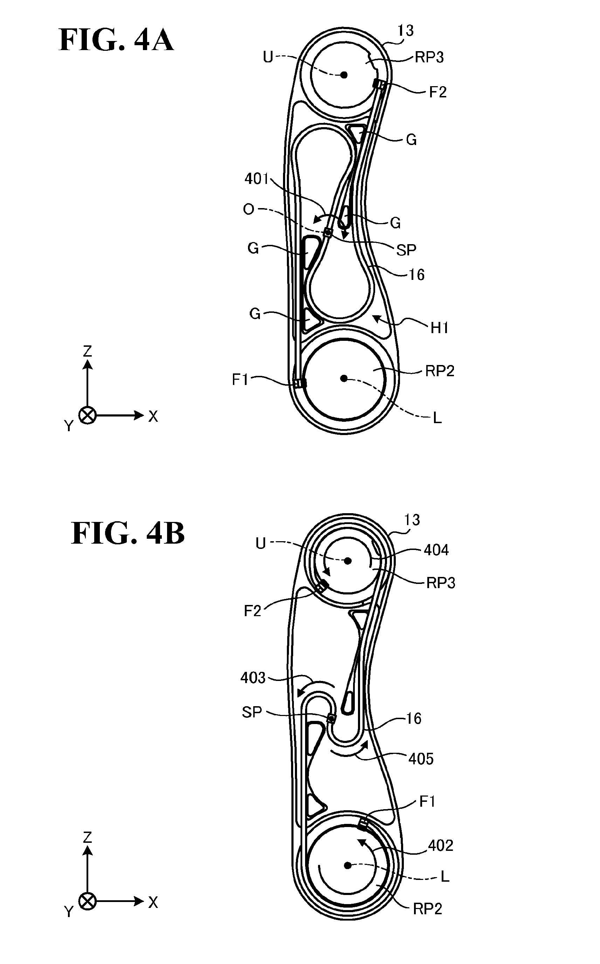

Next, specific routing configurations of the cable 16 will be described by referring to FIGs. 4A and 4B. FIGs. 4A and 4B are first and second internal structural views of the lower arm 13, illustrating specific configurations in which the cable 16 is routed.

As illustrated in FIG. 4A, the cable 16 has two bent portions when the cable 16 is routed within the space H1 in the lower arm 13. Specifically, one end of the cable 16 is coupled to the turnable portion RP2 by a fixing member F1 and windable around the axis L. The other end of the cable 16 is coupled to the turnable portion RP3 by a fixing member F2 and windable around the axis U.

A middle portion of the cable 16 is fixed to and supported by a turnable support SP. The turnable support SP is a supporting member disposed between the axis L and the axis U, and rotatable about an axis O, which is parallel to the axis L and the axis U in the space H1. Thus, at the point of the middle portion of the cable 16 supported by the turnable support SP, the cable 16 is turnable in the directions indicated by the double-headed arrow 401 in FIG. 4A.

A plurality of guides G are provided in the space H1 to guide the cable 16 along a predetermined path.

The turnable portion RP2 turns about the axis L and winds the routed cable 16 on, for example, the circumferential surface of the turnable portion RP (see the arrow 402) as illustrated in FIG. 4B. The part of the cable 16 from the middle portion supported by the turnable support SP to the fixing member F1 moves following the winding movement caused by the turnable portion RP2 (see the arrow 403 in FIG. 4B).

The turnable portion RP3 turns about the axis U and winds the cable 16 on, for example, the circumferential surface of the turnable portion RP3 (see the arrow 404 in FIG. 4B). The part of the cable 16 from the middle portion supported by the turnable support SP to the fixing member F2 moves following the winding movement caused by the turnable portion RP3 (see the arrow 405 in FIG. 4B).

Thus, the cable 16 is routed to follow the turning of the turnable portions RP2 and RP3 and to be wound around the turnable portions RP2 and RP3. This enables the robot 10 to operate without causing buckling and disconnection of the cable 16 in a space as small as the space H1. In other words, the robot 10 reliably operates with a neater appearance and without obstructing peripheral objects.

While in the above description the cable 16 is routed within a single space H1 in the lower arm 13, the cable 16 may be routed within a plurality of spaces.

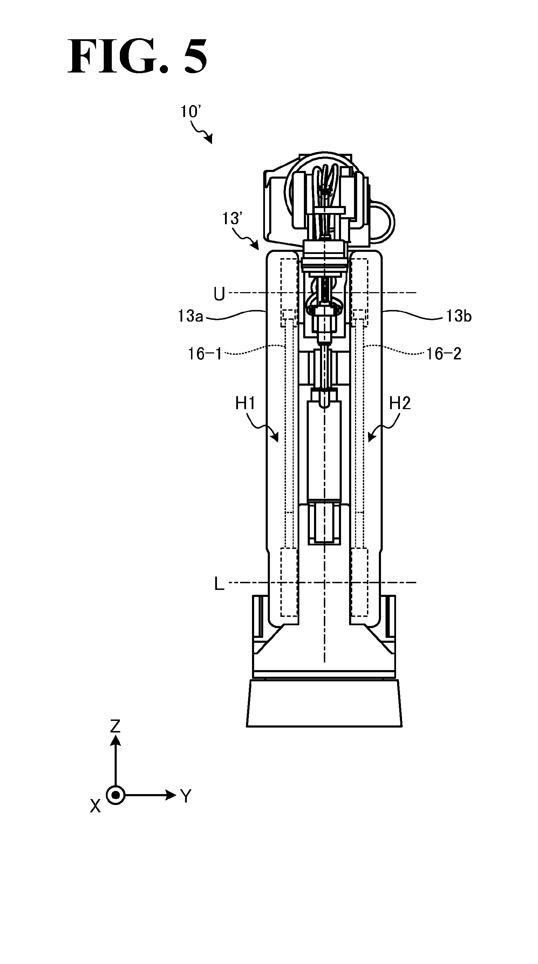

A modification will be described by referring to FIG. 5. FIG. 5 is a schematic front view of a robot 10' according to the modification, illustrating a possible configuration in which the cable 16 is routed.

As illustrated in FIG. 5, the robot 10' according to the modification includes a lower arm 13'. The lower arm 13' has a bifurcated shape opening on the front side (which is the positive direction side of the X axis in FIG. 5) in the length direction of the lower arm 13'. One part of the bifurcated shape is a first extension 13a, and the other part of the bifurcated shape is a second extension 13b.

In the first extension 13a, a space H1 is defined. In the second extension 13b, a space H2 is defined. The space H1 and the space H2 face each other in the length direction of the lower arm 13'.

The cable 16 is divided into, for example, a first cable 16-1 and a second cable 16-2. The first cable 16-1 and the second cable 16-2 are respectively routed in the space H1 and the space H2 in the manners illustrated in FIGs. 4A and 4B.

According to the modification, the first cable 16-1 and the second cable 16-2, which are respectively routed in the space H1 and the space H2, each have a width smaller than the width of the cable 16. This makes the first cable 16-1 and the second cable 16-2 more handleable in the routing work. In other words, the modification improves work efficiency in the assembly process or other processes involving the robot 10'.

In addition, the cable 16 is capable of serving different purposes depending on usage. For example, equipment cables may be routed in the space H1, while in-device cables may be routed in the space H2. This improves maintainability.

The use of the first cable 16-1 and the second cable 16-2 will not be limited to the equipment cable/in-device cable category; use of the first cable 16-1 and the second cable 16-2 in the feeding cable/non-feeding cable category is also possible.

Additionally, the first cable 16-1 and the second cable 16-2 are routed within the lower arm 13. This makes the robot 10' more favorable in appearance and less likely to obstruct peripheral objects. In other words, the modification ensures a neater appearance of the robot 10', and eliminates or minimizes the robot 10''s obstruction of the peripheral objects.

Next, specific routing configurations of the cable 16 around the axis S will be described by referring to FIGs. 6A to 6C. FIG. 6A is a perspective phantom view of the base 11 and its surroundings, illustrating a possible configuration in which the cable 16 is routed around the axis S.

The routing configuration described here is applicable to both the robots 10 and 10'. For ease of understanding, however, the following description will be under the assumption that the cable 16 is divided into the first cable 16-1 and the second cable 16-2.

As illustrated in FIG. 6A, the base 11 includes a base bottom surface 11a, a side wall 11b, and a space H4. The space H4 is defined by the base bottom surface 11a and the side wall 11b. The axis S is defined as a vertical axis approximately perpendicular to the base bottom surface 11a. The turnable portion RP1 is rotatable about the axis S in the space H4.

The wire cable C1, the first cable 16-1, and the second cable 16-2 are routed, while being bent, between the side wall 11b and the turnable portion RP1 along the circumferential surface of the approximately cylindrical rotating body drawn by the turnable portion RP1.

The wire cable C1, the first cable 16-1, and the second cable 16-2 are bent in different directions.

For example, the first cable 16-1 and the second cable 16-2 are bent in horizontal directions on the XY plane in FIG. 6A. The wire cable C1 is routed through a position inner than the bent portion of the first cable 16-1 and is bent, for example, in a horizontal direction on the XZ plane in FIG. 6A.

Specifically, the bending direction of the wire cable C1 is approximately 90 degrees different from the bending directions of the first cable 16-1 and the second cable 16-2. By bending the wire cable C1 and the first cable 16-1 in different directions in this manner, a nested structure is formed, for example. This eliminates or minimizes interference between the wire cable C1 and the first cable 16-1 while the turnable portion RP1 is turning or making other motions.

In addition, the wire cable C1, the first cable 16-1, and the second cable 16-2 can be individually bent regardless of the difference among their allowable bending radii.

Thus, a sufficient bending radius is secured for the wire cable C1 in the space H4, without being restricted by the bending radius of the first cable 16-1. This, as a result, ensures smooth feeding of the wire Wi (see FIG. 1).

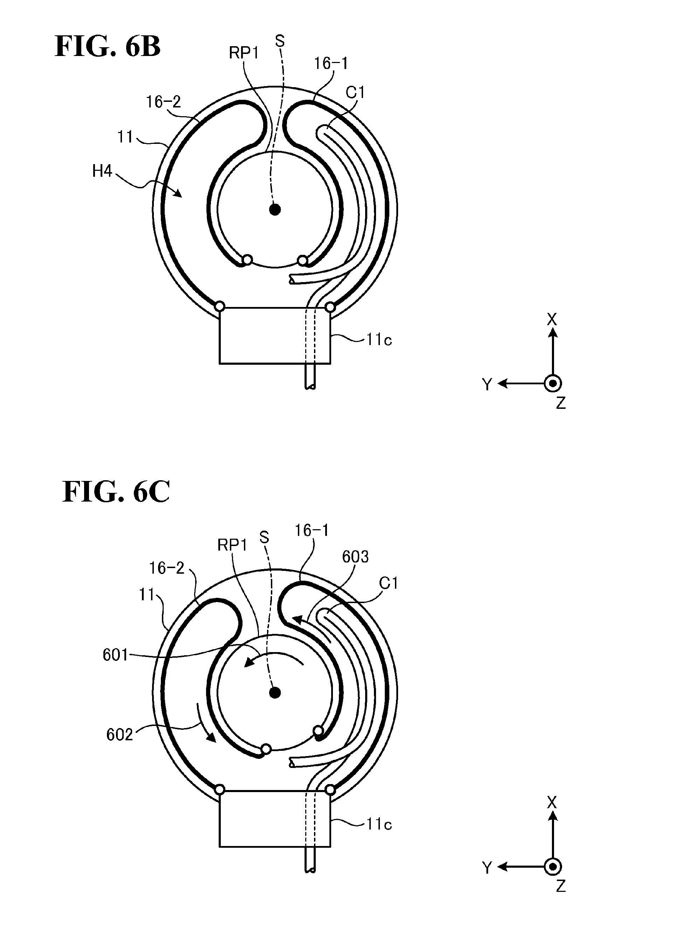

As illustrated in FIG. 6B, the first cable 16-1 and the second cable 16-2 are preferably routed in such a manner that with the robots 10 and 10' in their basic posture, the first cable 16-1 and the second cable 16-2 form an approximately symmetrical shape in a view from the axial direction of the axis S. This ensures sufficient routing spaces for both the first cable 16-1 and the second cable 16-2 in the space H4.

As illustrated in FIG. 6B, the base 11 includes a connector 11c. The first cable 16-1 and the second cable 16-2 are coupled to the connector 11c at one ends and coupled to the turnable portion RP1 at other ends.

This ensures that when the turnable portion RP1 turns about the axis S, the first cable 16-1 and the second cable 16-2 follow the turning of the turnable portion RP1 to move their bent portions, as illustrated in FIG. 6C.

Specifically, as illustrated in FIG. 6C, when the turnable portion RP1 rotates in the direction indicated by the arrow 601, the end of the second cable 16-2 coupled to the turnable portion RP1 is pulled by the turnable portion RP1 (see the arrow 602), and the bent portion of the second cable 16-2 moves toward the connector 11c.

At the same time, the end of the first cable 16-1 coupled to the turnable portion RP1 follows the turning of the turnable portion RP1, and the bent portion of the first cable 16-1 moves away from the connector 11c (see the arrow 603 in FIG. 6C).

The cable 16 is routed to move following the turning of the turnable portion RP1 about the axis S. This enables the robots 10 and 10' to operate without causing buckling and disconnection of the cable 16 in a space as small as the space H4. In other words, the robots 10 and 10' reliably operate with a neater appearance and without obstructing peripheral objects.

As illustrated in FIGs. 6B and 6C, the wire cable C1 is inserted into the space H4 through the connector 11c, routed in the space H4 while being bent in the above-described manner, and routed out of the base 11 from the periphery of the axis S along the exterior of the lower arm 13. Then, the wire cable C1 is inserted into the space H3 in the second arm 14b (see FIG. 1).

The routing configuration of the wire cable C1 will be described in more detail. FIG. 7 is a schematic perspective phantom view of the upper arm 14 and its surroundings. In FIG. 7, the second arm 14b is partially cut out to clearly illustrate the structure of the second arm 14b on the inner wall side facing the space H3.

As illustrated in FIG. 7, the second arm 14b includes the space H3. The space H3 is defined between the base end and the distal end of the second arm 14b, and open in the Z-axis direction in FIG. 7. In the space H3, a feeding device 30, which feeds the wire Wi to the torch 20, intersects the axis line of the axis R.

The feeding device 30 includes a motor 31 and a feeder 32. The motor 31 is a driving source of the feeder 32, and disposed on the inner wall of the second arm 14b with the output shaft of the motor 31 having an angle relative to the axis line of the axis R. Specifically, the motor 31 has its output shaft oriented toward the negative direction of the Y axis in FIG. 7.

This arrangement of the motor 31 reduces the space occupied by the feeding device 30 in the space H3 in the second arm 14b. This makes the second arm 14b compact and less likely to obstruct peripheral objects.

In a view from the positive direction of the Z axis in FIG. 7, the motor 31 fits into the space defined between the inner wall of the second arm 14b and the axis line of the axis R. This ensures a neater appearance of the robots 10 and 10', and eliminates or minimizes the robots 10's and 10''s obstruction of peripheral objects.

The motor 31 is preferably what is called a "flat motor" of less than one housing aspect ratio (axial direction dimension/radial direction dimension).

This reduces the dimensions of the feeding device 30 and the second arm 14b in the Y-axis direction, making the second arm 14b more compact.

The feeder 32 is coupled to the wire cable C1, which serves as a feeding path of the wire Wi. The wire cable C1 is routed along the axis line of the axis R.

A gas hose C2 supplies shield gas to the torch 20. A power cable C3 supplies welding power to the torch 20. The gas hose C2, the power cable C3, and other cables are cut off at their welded portions as necessary to be separated from the cable 16. Then, the gas hose C2, the power cable C3, and other cables are inserted into the space H3 and routed through a path different from the path of the wire cable C1.

As illustrated in FIG. 7, the wire cable C1, the gas hose C2, the power cable C3, and other cables have their bending directions regulated by a regulating plate 15e, and inserted into a passing port 15aa, which penetrates through the mounting portion 15. Then, the wire cable C1, the gas hose C2, the power cable C3, and other cables are coupled to the torch 20, which is fixed to the flange 15a through a torch clamp 21.

Thus, the welding equipment cables, including the wire cable C1, are routed along the axis line of the axis R in the space H3 between the base end and the distal end of the second arm 14b. This ensures a neater appearance of the robots 10 and 10', and eliminates or minimizes the welding equipment cables' obstruction of peripheral objects.

As has been described hereinbefore, the robot according to the embodiment includes the turnable base, the lower arm, the upper arm, the first space, the second space, the first routing member, and the second routing member. The turnable base is coupled to the base fixed to the installation surface, and is turnable about the first axis.

The lower arm includes the base end coupled to the turnable base and rotatable about the second axis approximately orthogonal to the first axis. The upper arm includes the base end coupled to the lower arm and rotatable about the third axis approximately parallel to the second axis.

The first space and the second space are disposed in the lower arm and face each other in the length direction of the lower arm. The first routing member and the second routing member each have at least two bent portions when the first routing member and the second routing member are routed within in the first space and the second space.

With this configuration, the robot according to the embodiment has a neater appearance, and eliminates or minimizes the robot's obstruction of peripheral objects.

In the embodiment, the robot has been described as being used for welding purposes. In welding applications, the embodiment is effective in protecting the routing members from burnout caused by heated pieces from spattering or similar processing, which is an advantageous effect in addition to the above-described advantageous effects.

While in the embodiment the robot has been described as being used for welding purposes, this should not be construed as limiting the operations of the robot. Another possible example is a workpiece handling robot to which a hand capable of holding a workpiece is attached as an end effector, instead of a welding torch.

While in the embodiment the routing member has been described as being a flat cable, the routing member may not necessarily be a flat cable. Another possible example is a strand of linear cables flexible enough to be bent at two portions or more while being routed in the inner space of the lower arm.

While in the embodiment the robot has been described as being a six-axis robot, this should not be construed as limiting the number of axes of the robot. Another possible example is a seven-axis robot.

While in the embodiment the robot has been described as being a single arm robot, this should not be construed as limiting the number of arms of the robot. Another possible example is a two-arm robot or a multi-arm robot.

Obviously, numerous modifications and variations of the present disclosure are possible in light of the above teachings. It is therefore to be understood that within the scope of the appended claims, the present disclosure may be practiced otherwise than as specifically described herein.
- 10, 10': Robot
- 11: Base
- 11a: Base bottom surface
- 11b: Side wall
- 11c: Connector
- 12: Turnable base
- 13, 13': Lower arm
- 13a: First extension
- 13b: Second extension
- 14: Upper arm
- 14a: First arm
- 14b: Second arm
- 15: Mounting portion
- 15a: Flange
- 15aa: Passing port
- 15e: Regulating plate
- 16, 16', 16": Cable (Routing member)
- 16-1: First cable (First routing member)
- 16-2: Second cable (Third routing member)
- 16a to 16i: Cable
- 20: Torch
- 21: Torch clamp
- 30: Feeding device
- 31: Motor
- 32: Feeder
- B: axis
- C1: Wire cable
- C2: Gas hose
- C3: Power cable
- CP: Outer cover
- F1, F2: Fixing member
- G: Guide
- H1 to H4: Space
- J1 to J6: Joint mechanism
- L: Axis
- M1 to M6: Servomotor
- O: Axis
- R: Axis
- RP1 to: RP6 Turnable portion
- S: Axis
- SP: Turnable support
- T: Axis
- U: Axis
- Wi: Wire

## Claims

1. A robot (10, 10'), **characterized by**:
a turnable base (12) coupled to a base (11) fixed to an installation surface, the turnable base (12) being turnable about a first axis;
a lower arm (13, 13') comprising a first base end coupled to the turnable base (12) and rotatable about a second axis approximately orthogonal to the first axis;
an upper arm (14) comprising a second base end coupled to the lower arm (13, 13') and rotatable about a third axis approximately parallel to the second axis;
a first space (H1) and a second space (H2) disposed in the lower arm (13, 13'), the first space (H1) and the second space (H2) facing each other and extending in a length direction of the lower arm (13, 13'); and
a first routing member (16-1) and a second routing member (16-2) respectively routed in the first space (H1) and the second space (H2) and each comprising at least two bent portions bent in the first space (H1) and the second space (H2).

2. The robot (10, 10') according to claim 1, wherein the first routing member (16-1) and the third routing member (16-2) each comprise a plurality of linear cables (16a, 16b, 16c, 16d, 16e, 16f, 16g, 16h, 16i) arranged side by side to form a band (16, 16', 16").

3. The robot (10, 10') according to claim 2, wherein in each of the first routing member (16-1) and the second routing member (16-2), the plurality of linear cables (16a, 16b, 16c, 16d, 16e, 16f, 16g, 16h, 16i) are in contact with each other at least at a part of the plurality of linear cables.

4. The robot (10, 10') according to any one of claims 1 to 3, wherein at least one routing member among the first routing member (16-1) and the second routing member (16-2) comprises an equipment cable for a welding purpose.

5. The robot (10, 10') according to any one of claims 1 to 4, wherein the first routing member (16-1) and the second routing member (16-2) each comprise one end coupled to a turnable portion (RP2) of the lower arm (13, 13') and windable around the second axis, and comprise another end coupled to a turnable portion (RP3) of the upper arm (14) and windable around the third axis.

6. The robot (10, 10') according to any one of claims 1 to 5, further comprising:
a wrist (14b) comprising:
a third base end coupled to the upper arm (14) and rotatable about a fourth axis approximately orthogonal to the third axis; and
a third space at least at a portion of the wrist (14b) intersecting an axis line of the fourth axis; and
a cable (C1) to feed a welding wire, the cable (C1) being routed out of the base (11) along an exterior of the lower arm (13, 13') and inserted into the third space of the wrist (14b).
